(19) Europäisches Patentamt
European Patent Office
Office européen des brevets

(11) **EP 1 902 513 B1**

(12) **FASCICULE DE BREVET EUROPEEN**

(45) Date de publication et mention
de la délivrance du brevet:
**15.10.2008 Bulletin 2008/42**

(51) Int Cl.:
**H02M 7/493** $^{(2007.01)}$

(21) Numéro de dépôt: **06778763.0**

(86) Numéro de dépôt international:
**PCT/FR2006/001579**

(22) Date de dépôt: **04.07.2006**

(87) Numéro de publication internationale:
**WO 2007/006902 (18.01.2007 Gazette 2007/03)**

(54) **PROCEDE ET DISPOSITIF D'ALIMENTATION D'UN COUPLEUR MAGNETIQUE**

VERFAHREN UND EINRICHTUNG ZUR ZUFÜHRUNG ZU EINEM MAGNETISCHEN KOPPLER

METHOD AND DEVICE FOR SUPPLY TO A MAGNETIC COUPLER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.07.2005 FR 0507136**

(43) Date de publication de la demande:
**26.03.2008 Bulletin 2008/13**

(73) Titulaires:
• **CENTRE NATIONAL DE
LA RECHERCHE SCIENTIFIQUE (CNRS)
Etablissement Public
75016 Paris (FR)**
• **INSTITUT NATIONAL POLYTECHNIQUE
DE TOULOUSE (I.N.P.T.)
31029 Toulouse Cédex 4 (FR)**
• **UNIVERSITE MONTPELLIER II SCIENCES ET
TECHNIQUES
DU LANGUEDOC
F-34095 Montpellier Cédex (FR)**

(72) Inventeurs:
• **MEYNARD, Thierry, Antoine
F-31700 Beauzelle (FR)**
• **FOREST, François
F-34980 St Clement De Riviere (FR)**
• **RICHARDEAU, Frédéric
F-31130 Flourens (FR)**
• **LABOURE, Eric
F-94230 Cachan (FR)**

(74) Mandataire: **Le Cacheux, Samuel L.R. et al
Cabinet Lavoix
62, rue de Bonnel
69448 Lyon Cedex 03 (FR)**

(56) Documents cités:
**US-A- 5 337 227          US-A- 5 703 767**

• **IN GYU PARK ET AL: "Modeling and analysis of multi-interphase transformers for connecting power converters in parallel" POWER ELECTRONICS SPECIALISTS CONFERENCE, 1997. PESC '97 RECORD., 28TH ANNUAL IEEE ST. LOUIS, MO, USA 22-27 JUNE 1997, NEW YORK, NY, USA,IEEE, US, vol. 2, 22 juin 1997 (1997-06-22), pages 1164-1170, XP010241695 ISBN: 0-7803-3840-5 cité dans la demande**

## Description

La présente invention concerne un procédé et un dispositif d'alimentation d'un coupleur magnétique.

Les coupleurs magnétiques (« Multi-Interphase Transformers » en anglais) sont utilisés, par exemple, pour raccorder une charge à une source d'alimentation polyphasée.

Il est connu d'utiliser des sources d'alimentation polyphasées aptes à générer N tensions ou courants d'alimentation périodiques décalés angulairement les uns par rapport aux autres, N étant un entier supérieur ou égal à 4. Les décalages angulaires entre les tensions ou courants d'alimentation utilisés sont uniformément distribués entre 0 et 2 π rad. Un décalage angulaire de 2π rad correspond à une période de la tension ou du courant.

Des coupleurs magnétiques connus comportent plusieurs couples d'enroulements, chaque couple étant formé d'un premier et d'un second enroulements adjacents couplés magnétiquement l'un à l'autre par l'intermédiaire d'un noyau en matériau magnétique ou noyau magnétique. Différentes structures de coupleurs magnétiques connus sont décrites dans l'article suivant :

> « Modeling and Analysis of Multi-Interphase Transformers for Connecting Power Converters in Parallel », IN GYU PARK and SEON IK KIM, Dept. of Control and Instrumentation Eng., Wonkwang University, Iksan, Chonbuk, 570-749 Korea, IEEE 1997.

Les procédés connus d'alimentation de ces coupleurs consistent à alimenter le premier enroulement de chaque couple avec une tension ou un courant d'alimentation décalé angulairement d'un angle $\alpha$ par rapport à la tension ou au courant d'alimentation du second enroulement du même couple.

Dans les procédés connus, l'angle $\alpha$ est égal à 2π/N pour chaque couple d'enroulements.

Les coupleurs magnétiques ainsi alimentés fonctionnent correctement mais sont encombrants. Il est aujourd'hui souhaitable de réduire l'encombrement de ces coupleurs magnétiques.

L'invention vise donc à proposer un procédé d'alimentation d'un coupleur, magnétique permettant, à performance égale, de réduire l'encombrement du coupleur magnétique. L'invention a donc pour objet un procédé d'alimentation d'un coupleur magnétique dans lequel la valeur absolue de l'angle $\alpha$ est supérieure ou

égale à $\dfrac{4\pi}{N}$ pour au moins un couple d'enroulements.

Il a été observé que, à performance égale, le fait de choisir la valeur absolue de l'angle $\alpha$ supérieure

ou égale à $\dfrac{4\pi}{N}$ pour au moins un couple d'enroulements réduit le flux magnétique maximal traversant le noyau magnétique couplant les enroulements de ce couple. En effet, en imposant une telle valeur pour la valeur absolue de l'angle $\alpha$ pour au moins l'un des couples d'enroulements, on se rapproche du cas où le décalage angulaire des tensions ou courants d'alimentation de ce couple d'enroulements est égal à π rad, ce qui correspond à une réduction optimale du flux magnétique maximal observable dans le noyau magnétique couplant ces deux enroulements.

Puisque le flux magnétique maximal traversant la section d'un noyau magnétique est réduit, il est possible de réduire les dimensions de ce noyau magnétique, de sorte que l'encombrement du coupleur est également réduit.

De plus, grâce à la distribution uniforme des décalages angulaires des N tensions ou courants d'alimentation, les harmoniques de tension ou de courant dans la charge alimentée par l'intermédiaire de ce coupleur sont réduites.

Les modes de réalisation de ce procédé d'alimentation peuvent comporter une ou plusieurs des caractéristiques suivantes :

- la valeur absolue de l'angle $\alpha$ est supérieure ou égale

  à $\dfrac{4\pi}{N}$ pour chaque couple d'enroulements ;

- la valeur absolue de l'angle $\alpha$ est comprise entre

  $\pi - \dfrac{2\pi}{N}$ rad et $\pi + \dfrac{2\pi}{N}$ rad pour chaque couple d'enroulements ;

- lorsque N est impair, la valeur absolue de l'angle $\alpha$ est égale à [(N-1)/2].(2π/N),
- lorsque N est un multiple de 4, la valeur absolue de l'angle $\alpha$ est égale à [(N/2)-1].(2π/N), et
- lorsque N est pair, l'angle $\alpha$ est égal à [(N/2)-1].(2π/N)

  pour $\dfrac{N}{2}-1$ couples d'enroulements, à π pour deux couples d'enroulements et à -[(N/2)-1].(2π/N) pour les autres couples d'enroulements.

Ces modes de réalisation du procédé d'alimentation présentent en outre les avantages suivants :

- choisir un angle $\alpha$ dont la valeur absolue est supérieure ou égale à $\dfrac{4\pi}{N}$ pour chaque couple d'enroulements permet de réduire l'encombrement du coupleur magnétique ;
- le choix d'un angle $\alpha$ dont la valeur absolue est com-

prise entre $\pi - \dfrac{2\pi}{N}$ rad et

$\pi + \dfrac{2\pi}{N}$ rad pour chaque couple d'enroulements permet d'obtenir une réduction optimale de l'encombrement du coupleur magnétique ; et

- l'utilisation des formules données ci-dessus pour calculer l'angle $\alpha$ en fonction de la valeur de N permet d'obtenir un décalage angulaire proche de $\pi$ pour chaque couple d'enroulements et donc une réduction optimale de l'encombrement du coupleur magnétique.

L'invention a également pour objet un dispositif d'alimentation d'un dipôle électrique, ce dispositif comportant :

- une source d'alimentation à N phases , les décalages angulaires entre les phases étant uniformément répartis entre 0 et $2\pi$ rad, N étant supérieur ou égal à quatre,
- un coupleur magnétique pour raccorder simultanément chacune des phases de la source d'alimentation au dipôle électrique, le coupleur magnétique comportant plusieurs couples d'enroulements, chaque couple d'enroulements étant formé d'un premier et d'un second enroulements adjacents couplés magnétiquement l'un à l'autre par l'intermédiaire d'un noyau en matériau magnétique, le premier enroulement de chaque couple étant alimenté par une phase de la source d'alimentation décalée angulairement d'un angle $\alpha$ par rapport à la phase de la source d'alimentation alimentant le second enroulement du même couple,
- la valeur absolue de l'angle $\alpha$ est supérieure ou égale à $4\pi/N$ pour au moins un couple d'enroulements.

Les modes de réalisation de ce dispositif peuvent comporter une ou plusieurs des caractéristiques suivantes :

- le coupleur magnétique comporte pour chaque premier couple d'enroulements un second couple d'enroulements associé à ce premier couple d'enroulements, chaque second couple d'enroulements étant formé d'un troisième et d'un quatrième enroulements adjacents couplés magnétiquement l'un à l'autre et au premier et second enroulements du premier couple associé par l'intermédiaire du même noyau en matériau magnétique, le second couple étant isolé électriquement du premier couple d'enroulements associé, seuls les premier et second enroulements étant raccordés aux phases de la source d'alimentation et seuls les troisième et quatrième enroulements étant raccordés au dipôle électrique ;
- le premier enroulement de chaque couple est directement raccordé à l'une des phases de la source d'alimentation tandis que le second enroulement du même couple est raccordé à une phase différente de la source d'alimentation par l'intermédiaire du premier enroulement d'un autre couple d'enroulements ;
- les premier et second enroulements de chaque couple d'enroulements sont directement raccordés à des phases respectives de la source d'alimentation ;
- chaque couple d'enroulements est magnétiquement indépendant des autres couples d'enroulements ;
- chaque premier ou second enroulements du couple magnétique appartient à la fois à un premier et un second couples d'enroulement ;
- chaque enroulement est enroulé autour d'une branche en matériau magnétique ayant une première et une seconde extrémités, les premières extrémités de chaque branche étant magnétiquement raccordées par l'intermédiaire d'une première jambe en matériau magnétique, les secondes extrémités de chaque branche étant magnétiquement raccordées par l'intermédiaire d'une seconde jambe en matériau magnétique, les première et seconde jambes décrivant chacune une circonvolution reliant toutes les branches ;
- chaque phase de la source d'alimentation impose une tension ou un courant d'alimentation, les formes d'onde de ces tensions ou courant d'alimentation étant toutes identiques à un décalage angulaire près multiple de $2\pi/N$.

Ces modes de réalisation du dispositif d'alimentation présentent en outre les avantages suivantes :

- l'utilisation d'un second couple d'enroulements associés à chaque premier couple d'enroulements permet d'obtenir une isolation galvanique de la charge par rapport à la source d'alimentation ;
- le fait que chaque couple d'enroulements soit isolé magnétiquement des autres couples d'enroulements permet d'utiliser des transformateurs à deux enroulements pour réaliser un coupleur magnétique, ce qui facilite sa fabrication à partir de noyaux magnétiques standards ;
- le fait que chaque enroulement appartient à la fois à un premier et un second couples d'enroulement magnétiques, équilibre les tensions ou courants dans le coupleur magnétique ce qui permet d'obtenir une réduction de son dimensionnement.

L'invention sera mieux comprise à la lecture de la description qui va suivre, donnée uniquement à titre d'exemple et faite en se préférant aux dessins sur lesquels :

- la figure 1 est un schéma électronique d'un premier dispositif d'alimentation d'une charge par l'intermédiaire d'un coupleur magnétique ;

- la figure 2 est un graphe illustrant la distribution des phases d'une source d'alimentation du dispositif de la figure 1 ;
- la figure 3 est un organigramme d'un procédé d'alimentation du coupleur magnétique dans le dispositif de la figure 1 ;
- les figures 4 et 5 sont des schémas électroniques respectivement d'un deuxième et d'un troisième mode de réalisation d'un dispositif d'alimentation d'une charge par l'intermédiaire d'un coupleur magnétique ;
- la figure 6 est une illustration schématique en perspective de la structure d'un coupleur magnétique monolithique utilisable dans les dispositifs des figures 1, 4 et 5 ; et
- la figure 7 est une illustration schématique de la structure d'un autre coupleur magnétique monolithique utilisable dans les dispositifs des figures 1, 4 et 5.

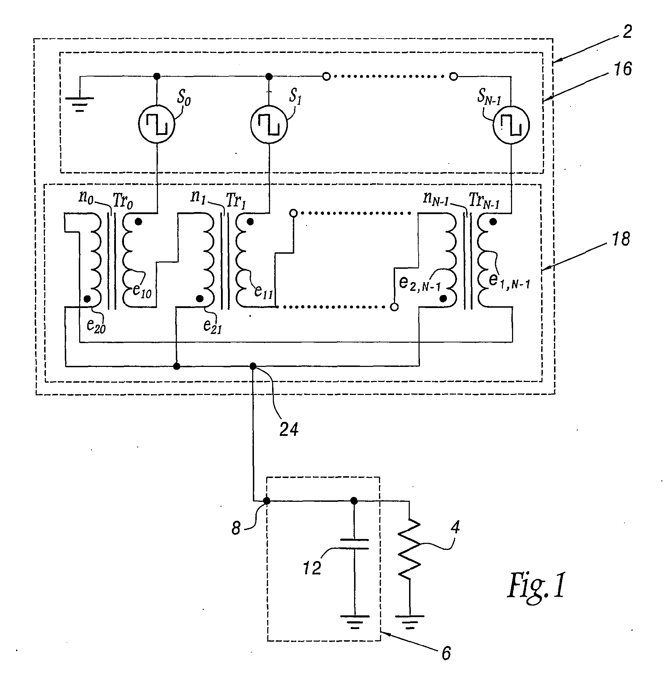

La figure 1 représente un dispositif 2 d'alimentation d'un dipôle électrique 4. Ici, le dipôle 4 est raccordé au dispositif 2 par l'intermédiaire d'un filtre 6 équipé d'une entrée 8.

Par exemple, le dipôle 4 est une résistance.

Le filtre 6 est, par exemple, un filtre comportant uniquement un condensateur de filtrage 12 raccordé en parallèle aux bornes du dipôle 4. Ici, le dispositif 2 permet d'éviter l'usage d'une inductance de filtrage.

Le dispositif 2 comporte une source 16 de tensions polyphasées et un coupleur magnétique 18 pour raccorder la source 16 au dipôle 4.

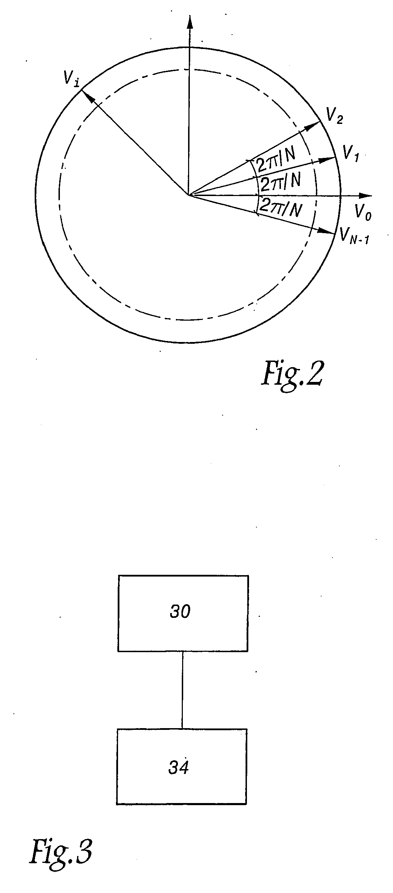

La source 16 est une source à N phases, N étant un nombre entier supérieur ou égal à 4. La source 16 délivre donc N tensions $V_i$, où l'indice i est le numéro de la phase compris entre 0 et N-1. Par convention, le décalage angulaire entre les tensions $V_0$ et $V_i$ est pris

égal à $\dfrac{2\pi i}{N}$. Les décalages angulaires entre les tensions $V_0$ à $V_{N-1}$ sont donc uniformément distribués entre 0 et $2\pi$ rad, comme illustré sur la figure 2.

Sur la figure 2, chaque vecteur correspond à une tension $V_i$, le module de ce vecteur correspondant au module du fondamental de tension et l'angle de ce vecteur par rapport à l'axe des abscisses correspondant à son déphasage par rapport au fondamental de la tension $V_0$. Comme illustré, lorsque le déphasage des fondamentaux des tensions $V_0$ à $V_{N-1}$ est uniformément réparti, l'angle de déphasage entre deux vecteurs de tension successifs sur le graphe de la figure 2 est égal à $2\pi/N$.

Ici, les amplitudes des tensions $V_0$ à $V_{N-1}$ sont toutes identiques car toutes les tensions $V_0$ à $V_{N-1}$ présentent les mêmes formes d'ondes périodiques décalées les unes par rapport aux autres d'un décalage angulaire

égal à $\dfrac{2\pi}{N}$ `rad.`

Sur la figure 1, la source 16 a été représentée sous la forme de N sources de tension monophasées $S_0$ à $S_{N-1}$ délivrant les tensions $V_0$ à $V_{N-1}$. A titre d'illustration, le décalage angulaire de la tension générée par chaque source Si est réglable pour correspondre à l'une quelconque des tensions $V_0$ à $V_{N-1}$. Les tensions $V_0$ à $V_{N-1}$ ne sont pas générées dans l'ordre par les sources $S_0$ à $S_{N-1}$ comme on le verra par la suite.

Pour simplifier la figure 1, seules trois sources de tension $S_0$, $S_1$ et $S_{N-1}$ ont été représentées.

La source 16 est, par exemple, un réseau d'alimentation polyphasé, un hacheur ou un onduleur de tensions polyphasé, un redresseur de tensions commandable formé de diodes et de thyristors ou encore un étage primaire d'une alimentation « flyback ». Ces tensions périodiques $V_i$ ne sont pas nécessairement sinusoïdales mais sont, par exemple, rectangulaires ou triangulaires et peuvent comporter une composante continue.

Le coupleur 18 comporte dans ce mode de réalisation N transformateurs monophasés $Tr_0$ à $Tr_{N-1}$. Chaque transformateur est formé d'un enroulement primaire $e_{1i}$ et d'un enroulement secondaire $e_{2i}$ adjacents couplés magnétiquement l'un à l'autre par l'intermédiaire d'un noyau magnétique ni, ou i est le même indice que celui précédemment utilisé.

Chaque transformateur forme un couple d'enroulements magnétiquement couplés l'un à l'autre par l'intermédiaire du noyau magnétique.

Ici, les N transformateurs $Tr_i$ sont magnétiquement indépendants les uns des autres.

Pour simplifier la figure, seuls trois transformateurs $Tr_0$, $Tr_1$ et $Tr_{N-1}$ ont été représentés sur la figure 1.

Chaque enroulement primaire $e_{1i}$ est directement raccordé par une extrémité à la source $S_i$.

L'enroulement secondaire $e_{2i}$ de chaque transformateur $Tr_i$ est raccordé à la source $S_{i-1}$ par l'intermédiaire de l'enroulement primaire $e_{1,i-1}$ du transformateur $Tr_{i-1}$. Dans le cas où l'indice i est égal à 0, l'enroulement secondaire $e_{20}$ est raccordé à la source $S_{N-1}$ par l'intermédiaire de l'enroulement $e_{1,N-1}$ du transformateur $Tr_{N-1}$.

L'extrémité de chaque enroulement secondaire qui n'est pas raccordée à l'une des sources Si est directement raccordée à un point milieu 24 lui-même directement raccordé à l'entrée 8 du filtre 6.

Le fonctionnement du dispositif 2 va maintenant être décrit en regard du procédé de la figure 3.

Initialement, lors d'une étape 30, le décalage angulaire de chaque source $S_0$ à $S_{N-1}$ est réglé pour que la tension d'alimentation de l'enroulement primaire $e_{1i}$ de chaque transformateur soit décalé d'un angle $\alpha$, dont la

valeur absolue est supérieure à $\dfrac{4\pi}{N}$, par rapport à la tension d'alimentation de l'enroulement secondaire $e_{2i}$

du même transformateur. Ici, le décalage angulaire des sources $S_0$ à $S_{N-1}$ est réglé pour que la valeur absolue de l'angle $\alpha$ soit comprise entre $\pi - \dfrac{2\pi}{N}$ rad et $\pi + \dfrac{2\pi}{N}$ rad pour les enroulements de chaque transformateur.

Plus précisément, le décalage angulaire des sources $S_i$ est réglé pour que la valeur absolue du décalage angulaire $\alpha$ entre les tensions d'alimentation des enroulements $e_{1i}$ et $e_{2i}$ soit égale à :

- [(N-1)/2].(2π/N) si N est un nombre impair ; et
- [(N/2)-1].(2π/N) si N est un multiple de 4.

Lorsque **N** est pair l'angle $\alpha$ est égal à [(N/2)-1)].(2π/N) pour les $\dfrac{N}{2} - 1$ premiers transformateurs, π pour le $\dfrac{N}{2}$ énième énième et le **N**énième transformateur, et -[(N/2)-1)].(2π/N) pour les autres transformateurs.

Lorsque **N** est un multiple de 4, deux formules de calcul de l'angle $\alpha$ sont donc applicables car **N** est alors aussi pair.

Ensuite, lors d'une étape 34, les enroulements de chaque transformateur sont alimentés à l'aide de tensions d'alimentation ayant un décalage angulaire l'une par rapport à l'autre d'un angle $\alpha$, tel que déterminé lors de l'étape 30.

Un tel choix de l'angle $\alpha$ réduit au maximum le flux magnétique maximal traversant la section des noyaux magnétiques $n_0$ à $n_{N-1}$ de sorte que cette section peut être réduite, ce qui réduit l'encombrement global du coupleur 18. Le flux magnétique maximal au travers de la section du noyau magnétique est réduit, car en augmentant le déphasage entre les enroulements primaire et secondaire, on s'éloigne de la situation où à un instant donné, les champs magnétiques maximaux créés par ces deux enroulements s'additionnent à l'intérieur du noyau magnétique.

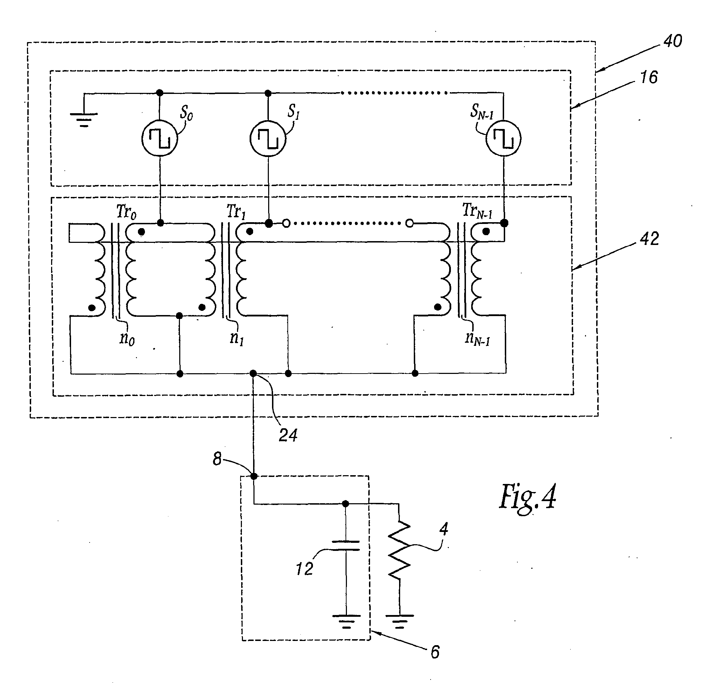

La figure 4 représente un deuxième mode de réalisation d'un dispositif 40 d'alimentation du dipôle 4. Sur la figure 4, les éléments déjà décrits en regard de la figure 1 portent les mêmes références numériques.

Le dispositif 40 comporte la source d'alimentation 16 et un coupleur magnétique 42. Le coupleur 42 diffère du coupleur 18 uniquement par le fait que les enroulements primaire et secondaire de chaque transformateur sont directement raccordés à des sources de tension $S_i$ respectives. Le procédé d'alimentation est identique à celui décrit en regard de la figure 3. Ce procédé d'alimentation permet également de réduire le flux magnétique maximal traversant la section de chaque noyau

magnétique $n_0$ à $n_{N-1}$.

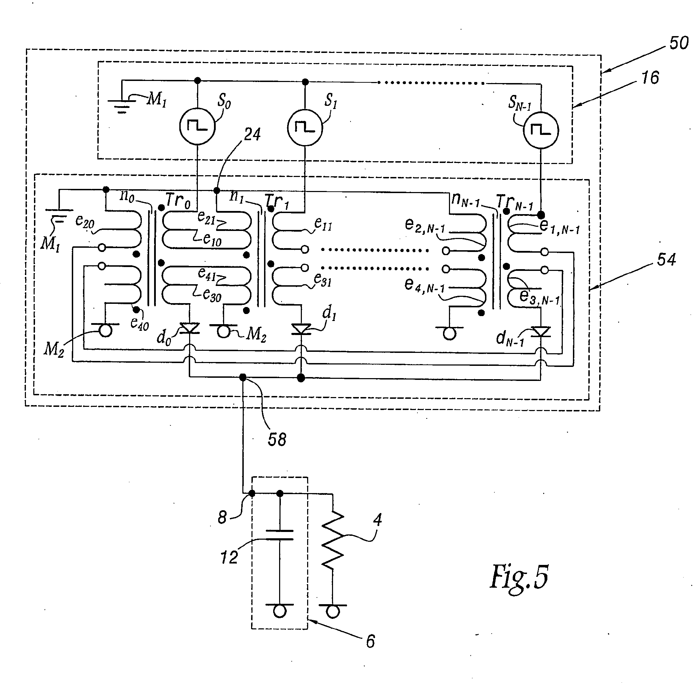

La figure 5 représente un troisième mode de réalisation d'un dispositif 50 d'alimentation du dipôle 4. Sur cette figure, les éléments déjà décrits en regard de la figure 1 portent les mêmes références numériques, seules les différences par rapport au dispositif 2 sont décrites ici.

Dans la figure 5, le filtre 6 ne doit pas comporter d'inductance.

Le dispositif 50 comporte la source d'alimentation 16 raccordée au dipôle 4 par l'intermédiaire d'un coupleur magnétique 54.

Dans le coupleur 54, le point milieu 24 est raccordé à un potentiel de référence $M_1$ et non plus à l'entrée 8 du filtre 6.

Dans ce mode de réalisation, chaque transformateur Tri comporte en plus du couple d'enroulements $e_{1i}$ et $e_{2i}$ un couple d'enroulements $e_{3i}$ et $e_{4i}$. Les enroulements $e_{3i}$ et $e_{4i}$ sont couplés magnétiquement aux enroulements $e_{1i}$ et $e_{2i}$ par l'intermédiaire du noyau magnétique $n_i$. Le couple d'enroulements $e_{3i}$ et $e_{4i}$ est électriquement isolé des enroulements $e_{1i}$ et $e_{2i}$.

Une extrémité de l'enroulement $e_{3i}$ est raccordée par l'intermédiaire d'une diode $d_i$ à un point commun 58. La cathode de la diode $d_i$ est dirigée vers le point commun 58.

Le point commun 58 est directement raccordé à l'entrée 8 du filtre 6.

L'autre extrémité de l'enroulement $e_{3i}$ est directement raccordée à une extrémité de l'enroulement $e_{4,i+1}$ du transformateur $Tr_{i+1}$ suivant. L'extrémité non raccordée à l'enroulement $e_{3i}$ de l'enroulement $e_{4,i+1}$ est raccordée à un potentiel de référence $M_2$ isolée électriquement du potentiel $M_1$.

L'extrémité non raccordée au point commun 58 de l'enroulement $e_{3,N-1}$ est directement raccordée à une extrémité de l'enroulement $e_{40}$.

Le procédé d'alimentation du coupleur 54 est le même que celui décrit en regard de la figure 3, de manière à réduire l'encombrement de ce coupleur.

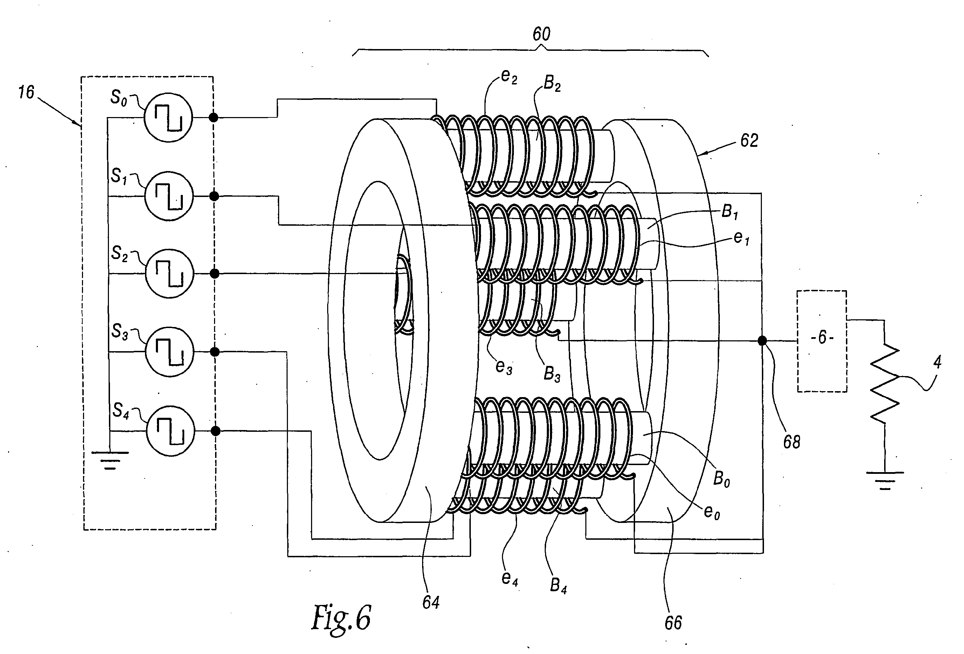

La figure 6 représente un coupleur magnétique monolithique 60 susceptible d'être utilisé en lieu et place des coupleurs magnétiques 18, 42 et 54. Contrairement aux coupleurs 18, 42 et 54, ce coupleur 60 n'est pas réalisé à partir de plusieurs transformateurs monophasés comportant chacun un noyau magnétique magnétiquement indépendant des autres noyaux magnétiques $n_i$.

Ici, le coupleur 60 comporte un noyau magnétique monolithique 62 à plusieurs branches horizontales $B_0$ à $B_{N-1}$. Sur la figure 6, **N** est égal à 5. Les extrémités gauches des branches $B_0$ à $B_{N-1}$ sont magnétiquement raccordées les unes aux autres par une jambe circulaire verticale 64. Les extrémités droites des branches $B_0$ à $B_{N-1}$ sont raccordées magnétiquement les unes aux autres par l'intermédiaire d'une autre jambe circulaire verticale droite 66.

Ici, chacune des jambes 64 et 66 forme une circonvolution ou un circuit fermé sur lui-même reliant toutes les branches $B_i$.

Un conducteur forme un enroulement $e_i$ autour de chaque branche horizontale $B_i$. Une extrémité de chaque enroulement $e_i$ est directement raccordée à un point commun 68, le point commun 68 est raccordé, par exemple, par l'intermédiaire du filtre 6 au dipôle 4.

L'autre extrémité de chaque enroulement $e_i$ est raccordée à une source Si respective de la source d'alimentation 16.

Ici, les enroulements adjacents $e_i$, $e_{i+1}$ portés par deux branches horizontales successives $B_i$, $B_{i+1}$ forment un couple d'enroulements magnétiquement couplés l'un à l'autre par l'intermédiaire du noyau 62. Toutefois, contrairement au mode de réalisation précédent, ici, un même enroulement peut appartenir à deux couples différents d'enroulements adjacents. Cette situation est illustrée sur la figure 6 à l'aide de l'enroulement $e_2$ qui forme un premier couple d'enroulements avec l'enroulement $e_1$ et un second couple d'enroulements avec l'enroulement $e_3$.

Le procédé d'alimentation du coupleur 60 est identique à celui décrit en regard de la figure 3. L'utilisation du procédé d'alimentation de la figure 3 permet de réduire le flux magnétique maximal traversant la section des jambes 64 et 66 de sorte que l'encombrement de ce coupleur 60 peut être réduit.

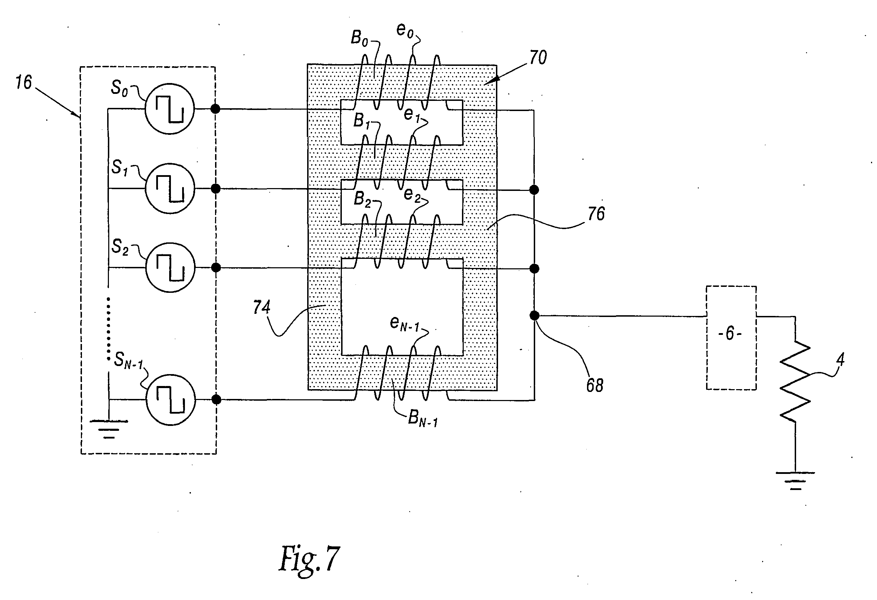

La figure 7 représente un autre mode de réalisation d'un coupleur magnétique monolithique 70 en échelle susceptible d'être utilisé en lieu et place des coupleurs magnétiques 18, 42 et 54.

Sur la figure 7, les éléments déjà décrits en regard de la figure 6 portent les mêmes références numériques.

Le coupleur 70 diffère du coupleur 60 essentiellement par le fait que les jambes verticales 64 et 66 sont remplacées par des montants verticaux respectivement 74 et 76. Ainsi, les montants 74 et 76 raccordent magnétiquement les extrémités des branches $B_0$ à $B_{N-1}$. Toutefois, dans ce mode de réalisation, les montants 74 et 76 ne forment pas une circonvolution ou un cercle fermé sur lui-même reliant toutes les branches $B_i$.

Les autres caractéristiques représentées sur la figure 7 sont identiques à celles représentées sur la figure 6 et ne seront donc pas décrites à nouveau.

Le procédé d'alimentation du coupleur 70 est identique à celui décrit en regard de la figure 3.

De nombreux autres modes de réalisation des dispositifs d'alimentation précédents et du procédé d'alimentation sont possibles. Par exemple, les sources de tension monophasées de la source 16 peuvent être remplacées par des sources réglables de courant monophasé. Dans ce cas, le procédé d'alimentation est identique à celui de la figure 3 à l'exception que l'angle $\alpha$ représente un décalage angulaire entre les courants d'alimentation d'un couple d'enroulements et que le filtre 6 est dépourvu d'inductance.

Dans le mode de réalisation de la figure 5, les enroulements $e_{1i}$ et $e_{2,i+1}$ peuvent être raccordés en parallèle entre la source d'alimentation et le premier potentiel de référence $M_1$ au lieu d'être raccordés en série comme décrit en regard de la figure 5. De même, les enroulements $e_{3i}$ et $e_{4i+1}$ peuvent aussi être raccordés en parallèle entre le point commun 58 et le second potentiel de référence $M_2$ au lieu d'être raccordés en série.

De préférence, la source 16 est formée de N sources monophasées dont le décalage angulaire n'est pas réglable. Dans ces conditions, l'étape 30 du procédé de la figure 3 est mise en oeuvre en raccordant les enroulements $e_{1i}$ et $e_{2i}$ aux sources monophasées appropriées pour obtenir le décalage angulaire $\alpha$.

## Revendications

**1.** Procédé d'alimentation d'un coupleur magnétique en utilisant N tensions ou courants d'alimentation périodiques décalés angulairement les uns par rapport aux autres, les décalages angulaires entre les N tensions ou courants d'alimentation utilisés étant uniformément distribués entre 0 et $2\pi$ rad, N étant un nombre entier supérieur ou égal à quatre, le coupleur magnétique comportant plusieurs couples d'enroulements, chaque couple étant formé d'un premier et d'un second enroulements adjacents couplés magnétiquement l'un à l'autre par l'intermédiaire d'un noyau en matériau magnétique, le procédé consistant en outre à alimenter (en 34) le premier enroulement de chaque couple avec une tension ou un courant d'alimentation décalé angulairement d'un angle $\alpha$ par rapport à la tension ou au courant d'alimentation du second enroulement du même couple, **caractérisé en ce que** la valeur absolue de l'angle $\alpha$ est supérieure ou égale à $\dfrac{4\pi}{N}$ pour au moins un couple d'enroulements.

**2.** Procédé selon la revendication 1, **caractérisé en ce que** la valeur absolue de l'angle $\alpha$ est supérieure ou égale à $\dfrac{4\pi}{N}$ pour chaque couple d'enroulements.

**3.** Procédé selon la revendication 2, **caractérisé en ce que** la valeur absolue de l'angle $\alpha$ est comprise entre $\pi - \dfrac{2\pi}{N}$ rad et $\pi + \dfrac{2\pi}{N}$ rad pour chaque couple d'enroulements.

**4.** Procédé selon la revendication 3, **caractérisé en ce que** :

- lorsque N est impair, la valeur absolue de l'angle $\alpha$ est égale à [(N-1)/2].(2$\pi$/N),
- lorsque N est un multiple de 4, la valeur absolue de l'angle $\alpha$ est égale à [(N/2)-1].(2$\pi$/N), et
- lorsque N est pair, l'angle $\alpha$ est égal à [(N/2)-1].(2$\pi$/N) pour $\dfrac{N}{2} - 1$ couples d'enroulements,

à $\pi$ pour deux couples d'enroulements et à -[(N/2)-1].(2$\pi$/N) pour les autres couples d'enroulements.

5. Dispositif d'alimentation d'un dipôle électrique comportant :

- une source (16) d'alimentation à N phases , les décalages angulaires entre les phases étant uniformément répartis entre 0 et 2$\pi$ rad, N étant supérieur ou égal à quatre,
- un coupleur magnétique (18 ; 42 ; 54 ; 60) pour raccorder simultanément chacune des phases de la source d'alimentation au dipôle électrique, le coupleur magnétique comportant plusieurs couples d'enroulements ($e_{1i}$, $e_{2i}$ ; $e_i$, $e_{i+1}$), chaque couple d'enroulements étant formé d'un premier et d'un second enroulements adjacents couplés magnétiquement l'un à l'autre par l'intermédiaire d'un noyau en matériau magnétique, le premier enroulement de chaque couple étant alimenté par une phase de la source d'alimentation décalée angulairement d'un angle $\alpha$ par rapport à la phase de la source d'alimentation alimentant le second enroulement du même couple,

**caractérisé en ce que** la valeur absolue de l'angle $\alpha$ est supérieure ou égale à 4$\pi$/N pour au moins un couple d'enroulements.

6. Dispositif selon la revendication 5, **caractérisé en ce que** le coupleur magnétique (54) comporte pour chaque premier couple d'enroulements un second couple d'enroulements associé à ce premier couple d'enroulements, chaque second couple d'enroulements étant formé d'un troisième et d'un quatrième enroulements ($e_{3i}$, $e_{4i}$) adjacents couplés magnétiquement l'un à l'autre et au premier et second enroulements du premier couple associé par l'intermédiaire du même noyau en matériau magnétique, le second couple étant isolé électriquement du premier couple d'enroulements associé, seuls les premier et second enroulements ($e_{1i}$, $e_{2i}$) étant raccordés aux phases de la source d'alimentation et seuls les troisième et quatrième enroulements ($e_{3i}$, $e_{4i}$) étant raccordés au dipôle électrique.

7. Dispositif selon la revendication 5 ou 6, **caractérisé**

**en ce que** le premier enroulement ($e_{1i}$) de chaque couple est directement raccordé à l'une des phases de la source d'alimentation tandis que le second enroulement du même couple est raccordé à une phase différente de la source d'alimentation par l'intermédiaire du premier enroulement d'un autre couple d'enroulements.

8. Dispositif selon la revendication 5 ou 6, **caractérisé en ce que** les premier et second enroulements de chaque couple d'enroulements sont directement raccordés à des phases respectives de la source d'alimentation.

9. Dispositif selon l'une quelconque des revendications 5 à 8, **caractérisé en ce que** chaque couple d'enroulements est magnétiquement indépendant des autres couples d'enroulements.

10. Dispositif selon l'une quelconque des revendications 5 à 8, **caractérisé en ce que** chaque premier ou second enroulement appartient à la fois à un premier et à un second couples d'enroulements.

11. Dispositif selon la revendication 10, **caractérisé en ce que** chaque enroulement est enroulé autour d'une branche en matériau magnétique ayant une première et une seconde extrémités, les premières extrémités de chaque branche étant magnétiquement raccordées par l'intermédiaire d'une première jambe en matériau magnétique, les secondes extrémités de chaque branche étant magnétiquement raccordées par l'intermédiaire d'une seconde jambe en matériau magnétique, les première et seconde jambes décrivant chacune une circonvolution reliant toutes les branches.

12. Dispositif selon l'une quelconque des revendications 5 à 11, **caractérisé en ce que** chaque phase de la source d'alimentation impose une tension ou un courant d'alimentation, les formes d'onde de ces tensions ou courant d'alimentation étant toutes identiques à un décalage angulaire près multiple de 2$\pi$/N.

**Claims**

1. Method of supplying power to a multi-interphase transformer by using N periodic supply voltages or currents, phase-shifted relative to one another, the phase shifts between the N supply voltages or currents used being uniformly distributed between 0 and 2$\pi$ rad, N being an integer greater than or equal to 4, the multi-interphase transformer comprising several pairs of windings, each pair being formed of a first and a second winding, adjacent and magnetically coupled to each other by means of a core made of magnetic material, the method furthermore consisting in supplying (to 34) the first winding of each pair with a supply voltage or current that is phase-shifted by an angle $\pi$ relative to the supply voltage or current of the second winding of the same pair, **characterized in that** the absolute value of the angle $\alpha$ is greater than or equal to $\dfrac{4\pi}{N}$ for at least one pair of windings.

2. Method according to Claim 1, **characterized in that** the absolute value of the angle $\alpha$ is greater than or equal to $\dfrac{4\pi}{N}$ for each pair of windings.

3. Method according to Claim 2, **characterized in that** the absolute value of the angle $\alpha$ is between $\pi - \dfrac{2\pi}{N}$ rad and $\pi + \dfrac{2\pi}{N}$ rad for each pair of windings.

4. Method according to Claim 3, **characterized in that**:

   - when N is odd, the absolute value of the angle $\alpha$ is equal to $[(N-1)/2]$ $(2\pi/N)$;
   - when N is a multiple of 4, the absolute value of the angle $\alpha$ is equal to $[(N/2)-1]$ $(2n/N)$; and
   - when N is even, the angle $\alpha$ is equal to $[(N/2)-1]$ $(2\pi/N)$ for $\dfrac{N}{2} - 1$ pairs of windings, equal to $\pi$ for two pairs of windings, and equal to $-[(N/2)-1]$ $(2\pi/N)$ for the other pairs of windings.

5. Device for supplying an electric dipole comprising:

   - an N-phase power supply (16), the phase-shifts between the phases being uniformly distributed between 0 and $2\pi$ rad, N being greater than or equal to 4;
   - a multi-interphase transformer (18, 42, 54, 60) for simultaneously connecting each of the phases of the power supply to the electric dipole, the multi-interphase transformer comprising several pairs of windings ($e_{1i}$, $e_{2i}$; $e_i$, $e_{i+1}$), each pair of windings being formed of a first and a second winding, adjacent and magnetically coupled to each other by means of a core made of magnetic material, the first winding of each pair being supplied by a phase of the power supply phase-shifted by an angle $\alpha$ relative to the phase of the power supply supplying the second winding of the same pair,

   **characterized in that** the absolute value of the angle $\alpha$ is greater than or equal to $4\pi/N$ for at least one pair of windings.

6. Device according to Claim 5, **characterized in that** the multi-interphase transformer (54) comprises, for each first pair of windings, a second pair of windings associated with this first pair of windings, each second pair of windings being formed of a third and a fourth winding ($e_{3i}$, $e_{4i}$) adjacent and magnetically coupled to each other and to the first and second windings of the associated first pair by means of the same core made of magnetic material, the second pair being electrically insulated from the associated first pair of windings, only the first and the second windings ($e_{1i}$, $e_{2i}$) being connected to the phases of the power supply and only the third and fourth windings ($e_{3i}$, $e_{4i}$) being connected to the electric dipole.

7. Device according to Claim 5 or 6, **characterized in that** the first winding ($e_{1i}$) of each pair is directly connected to one of the phases of the power supply while the second winding of the same pair is connected to a different phase of the power supply by means of the first winding of another pair of windings.

8. Device according to Claim 5 or 6, **characterized in that** the first and second windings of each pair of windings are directly connected to the respective phases of the power supply.

9. Device according to any one of Claims 5 to 8, **characterized in that** each pair of windings is magnetically independent of the other pairs of windings.

10. Device according to any one of Claims 5 to 8, **characterized in that** each first or second winding simultaneously belongs to a first and to a second pair of windings.

11. Device according to Claim 10, **characterized in that** each winding is wound around an arm made of magnetic material having a first and a second end, the first ends of each arm being magnetically connected by means of a first flange made of magnetic material, the second ends of each arm being magnetically connected by means of a second flange made of magnetic material, the first and second flanges each describing a turn connecting all the arms.

12. Device according to any one of Claims 5 to 11, **characterized in that** each phase of the power supply applies a supply voltage or current, the waveforms of these supply voltages or currents all being identical apart from a phase shift that is a multiple of $2\pi/N$.

**Patentansprüche**

1. Verfahren zur Versorgung eines Magnetkopplers unter Verwendung von N periodischen Versorgungsspannungen oder -strömen, die winkelmäßig zueinander verschoben sind, wobei die Winkelverschiebung zwischen den verwendeten N Versorgungsspannungen oder -strömen zwischen 0 und 2n rad gleichmäßig verteilt sind und N eine ganze Zahl größer oder gleich vier ist, wobei der Magnetkoppler mehrere Wicklungspaare umfasst und jedes Wicklungspaar aus einer ersten und einer zweiten Wicklung gebildet wird, die benachbart zueinander sind und miteinander über einen Magnetkern magnetisch gekoppelt sind, wobei das Verfahren darüber hinaus darin besteht, die erste Wicklung jedes Paares mit einer Versorgungsspannung oder einem Versorgungsstrom zu versorgen (bei 34), die bzw. der winkelmäßig um einen Winkel $\alpha$ in Bezug auf die Versorgungsspannung oder den Versorgungsstrom der zweiten Wicklung desselben Paares verschoben ist, **dadurch gekennzeichnet, dass** der absolute Wert des Winkels $\alpha$ größer oder gleich $\dfrac{4\pi}{N}$ für mindestens ein Wicklungspaar ist.

2. Verfahren nach Anspruch 1, **dadurch gekennzeichnet, dass** der Absolutwert des Winkels $\alpha$ größer oder kleiner $\dfrac{4\pi}{N}$ für jedes Wicklungspaar ist.

3. Verfahren nach Anspruch 2, **dadurch gekennzeichnet, dass** der Absolutwert des Winkels $\alpha$ zwischen $\pi - \dfrac{2\pi}{N}$ rad und $\pi + \dfrac{2\pi}{N}$ rad für jedes Wicklungspaar liegt.

4. Verfahren nach Anspruch 3, **dadurch gekennzeichnet, dass**

- wenn N ungerade ist, der Absolutwert des Winkels $\alpha$ gleich [(N-1)/2] (2$\pi$/N) ist,
- wenn N ein Vielfaches von 4 ist, der Absolutwert des Winkels $\alpha$ gleich [(N/2-1) (2$\pi$/N) ist, und

- wenn N gerade ist, der Winkel $\alpha$ gleich für $\dfrac{N}{2} - 1$ Wicklungspaare gleich $\pi$ für zwei Wicklungspaare und gleich -[(N/2)-1] (2$\pi$/N) für die anderen Wicklungspaare ist.

5. Vorrichtung zum Versorgen eines elektrischen Dipols umfassend:

- eine N-Phasen-Versorgungsquelle (16), wobei die Winkelverschiebung zwischen den Phasen gleichmäßig zwischen 0 und 2$\pi$ rad verteilt ist

und N größer oder gleich vier ist,
- einen Magnetkoppler (18; 42; 54; 60), um gleichzeitig jede der Phasen der Versorgungsspannung an den elektrischen Dipol anzuschließen, wobei der Magnetkoppler mehrere Wicklungspaare ($e_{1i}$, $e_{2i}$; $e_i$, $e_{i+1}$) umfasst und jedes Wicklungspaar aus einer ersten und einer zweiten Wicklung gebildet wird, die benachbart zueinander sind und miteinander über einen Magnetkern magnetisch gekoppelt sind, wobei die erste Wicklung jedes Paares von einer Phase der Versorgungsquelle versorgt wird, die winkelmäßig um einen Winkel $\alpha$ in Bezug auf die Phase der Versorgungsquelle verschoben ist, die die zweite Wicklung desselben Paares versorgt, **dadurch gekennzeichnet, dass** der Absolutwert des Winkels $\alpha$ größer oder gleich 4$\pi$/N für mindestens ein Wicklungspaar ist.

6. Vorrichtung nach Anspruch 5, **dadurch gekennzeichnet, dass** der Magnetkoppler (54) für jedes erste Wicklungspaar ein zweites Wicklungspaar umfasst, das diesem ersten Wicklungspaar zugeordnet ist, wobei jedes zweite Wicklungspaar von einer dritten und einer vierten Wicklung ($e_{3i}$, $e_{4i}$) gebildet wird, die benachbart zueinander sind und miteinander und mit der ersten und zweiten Wicklung des zugeordneten Paares über denselben Magnetkern magnetisch gekoppelt sind, wobei das zweite Paar zum zugeordneten ersten Wicklungspaar isoliert ist und wobei nur die ersten und zweiten Wicklungen ($e_{1i}$, $e_{2i}$) an die Phasen der Versorgungsquelle angeschlossen sind und nur die dritten und vierten Wicklungen ($e_{3i}$), $e_{4i}$) mit dem elektrischen Dipol verbunden sind.

7. Vorrichtung nach Anspruch 5 oder Anspruch 6, **dadurch gekennzeichnet, dass** die erste Wicklung ($e_{1i}$) jedes Paares direkt an eine der Phasen der Versorgungsquelle angeschlossen ist, während die zweite Wicklung desselben Paares an eine unterschiedliche Phase der Versorgungsquelle über die erste Wicklung eines anderen Wicklungspaares angeschlossen ist.

8. Vorrichtung nach Anspruch 5 oder 6, **dadurch gekennzeichnet, dass** die erste und zweite Wicklung jedes Wicklungspaares direkt an die jeweiligen Phasen der Versorgungsquelle angeschlossen sind.

9. Vorrichtung nach einem beliebigen der Ansprüche 5 bis 8, **dadurch gekennzeichnet, dass** jedes Wicklungspaar magnetisch unabhängig von den anderen Wicklungspaaren ist.

10. Vorrichtung nach einem beliebigen der Ansprüche 5 bis 8, **dadurch gekennzeichnet, dass** jede erste oder zweite Wicklung gleichzeitig zu einem ersten und einem zweiten Wicklungspaar gehört.

**11.** Vorrichtung nach Anspruch 10, **dadurch gekennzeichnet, dass** jede Wicklung um einen Schenkel aus magnetischem Material gewickelt ist, der ein erstes und ein zweites Ende aufweist, wobei die ersten Enden jedes Schenkels magnetisch über eine erste Strebe aus magnetischem Material verbunden sind, die zweiten Enden jedes Schenkels magnetisch über eine zweite Strebe aus magnetischem Material verbunden sind, wobei die erste und zweite Strebe jede eine geschlossene Kurve umschreibt, die alle Schenkel verbindet.

**12.** Vorrichtung nach einem beliebigen der Ansprüche 5 bis 11, **dadurch gekennzeichnet, dass** jede Phase der Versorgungsquelle eine Versorgungsspannung oder einen Versorgungsstrom aufdrückt, wobei die Wellenformen dieser Versorgungsspannungen oder -ströme alle identisch zu einer Winkelverschiebung nahe einem Vielfachen von $2\pi/N$ sind.

Fig.1

Fig.2

Fig.3

Fig.4

EP 1 902 513 B1

Fig.5

EP 1 902 513 B1

Fig.6

EP 1 902 513 B1

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Modeling and Analysis of Multi-Interphase Transformers for Connecting Power Converters in Parallel. **IN GYU PARK ; SEON IK KIM.** Dept. of Control and Instrumentation Eng. Wonkwang University, 1997, 570-749